# EUROPÄISCHE PATENTSCHRIFT

(11) **EP 4 074 228 B1**
(45) Veröffentlichungstag und Bekanntmachung des Hinweises auf die Patenterteilung: **07.05.2025**
(21) Anmeldenummer: 22161758.2
(22) Anmeldetag: 14.03.2022
(51) Int. Cl.: A47J 31/44, G01F 17/00

(54) **VERFAHREN ZUM BEREITSTELLEN EINER INFORMATION ÜBER EIN GEFÄSS**
METHOD FOR PROVIDING INFORMATION VIA A VESSEL
PROCÉDÉ DE FOURNITURE D'INFORMATIONS SUR UN RÉCIPIENT

(30) Priorität: 14.04.2021 BE 202105290; 14.04.2021 DE 102021109269
(43) Veröffentlichungstag der Anmeldung: 19.10.2022
(73) Patentinhaber: Miele & Cie. KG, 33332 Gütersloh (DE)
(72) Erfinder: Tembaak, Jutta, 49492 Westerkappeln (DE); Janson, Thomas, 33332 Gütersloh (DE); Kretschmer, Sascha, 33334 Gütersloh (DE)

(56) Entgegenhaltungen:
- EP-A2- 3 026 404
- WO-A1-2016/037612
- DE-A1- 102011 075 194
- DE-A1- 102014 102 490

## Beschreibung

Verfahren zum Bereitstellen einer Information über ein Gefäß und Verfahren zum Ausgeben eines Heißgetränks aus einem Heißgetränkeautomaten Die Erfindung betrifft ein Verfahren zum Bereitstellen einer Information über ein Gefäß, ein mobiles Gerät zur Ausführung des Verfahrens, einen Heißgetränkautomat und ein Computer-Programmprodukt mit Programmcode zur Durchführung des Verfahrens.

Die DE 10 2014 102 490 A1 beschreibt einen Heißgetränkeautomat mit Objekterkennungsmittel. Die Kamera ist in der Auslaufnische zur Erfassung des Behälters angeordnet.

Das Dokument DE 10 2014 102 490 A1 beschreibt einen Getränkebereiter mit einer am Auslauf angebrachten Kamera, um die unter den Auslauf platzierte Tasse hinsichtlich Form und Volumen zu erfassen.

Das Dokument WO 2016/037612 A1 offenbart ein mobiles Gerät mit einer Kamera, das dazu eingerichtet ist, den Füllstand an einem durchsichtigen Gefäß zu erkennen.

Der Erfindung stellt sich daher die Aufgabe ein verbessertes Verfahren zum Bereitstellen einer Information über ein Gefäß und ein verbessertes Verfahren zum Ausgeben eines Heißgetränks aus einem Heißgetränkeautomaten zu schaffen.

Erfindungsgemäß wird diese Aufgabe durch ein Verfahren zum Bereitstellen einer Information über ein Gefäß nach Anspruch 1, ein mobiles Gerät nach Anspruch 6, einen Heißgetränkautomat nach Anspruch 7 und ein Computer-Programmprodukt nach Anspruch 9 gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass mit einer Kamera eines mobilen Gerätes ein Gefäß erfasst wird, um ein Innenvolumen des Gefäßes als Information über das Gefäß zu bestimmen. Anschließend ist es möglich, das erfasste Innenvolumen bzw. die Information über das Gefäß an eine Einleseschnittstelle eines Heißgetränkeautomaten zu übermitteln, sodass der Heißgetränkeautomat unter Berücksichtigung des erfassten Innenvolumens der Information über das Gefäß ein Heißgetränk ausgibt.

Es wird ein Verfahren zum Bereitstellen einer Information über ein Gefäß in einer Umgebung eines mobilen Gerätes vorgestellt, das die Schritte des Anspruchs 1 umfasst.

Bei einem Gefäß kann es sich beispielsweise um eine Tasse oder ein Glas zum Aufnehmen eines Heißgetränks oder eines Mischgetränkes aus einem Heißgetränkeautomaten handeln. Unter einem Heißgetränkeautomat kann ein Automat zum Beziehen von Heißgetränken verstanden werden. Darunter fallen beispielsweise Kaffeevollautomaten und Teevollautomaten. Unter einem mobilen Gerät kann ein Mobiltelefon mit einer integrierten Kamera oder ein Tabletcomputer mit einer integrierten Kamera verstanden werden. Dabei kann die integrierte Kamera zumindest ein Bild aufnehmen. Durch eine Auswertung des Bildes kann ein Gefäß in der Umgebung des mobilen Gerätes erkannt werden. Die Erfassung des Gefäßes in der Umgebung wird durch ein Informationssignal repräsentiert. Zusätzlich kann unter Verwendung des Informationssignals ein Getränkeinformationssignal ermittelt werden. Das Getränkeinformationssignal repräsentiert dabei eine Information über das Gefäß wie beispielsweise das Innenvolumen des Gefäßes und wird an den Heißgetränkeautomaten weitergegeben. Der Heißgetränkeautomat kann schließlich auf Grundlage des Getränkeinformationssignals ein Heißgetränk ausgeben, das auf das erfasste Innenvolumen des Gefäßes angepasst ist.

Der hier vorgestellte Ansatz basiert auf der Erkenntnis, dass ein Gefäß unabhängig vom Heißgetränkeautomaten erfasst werden kann und Gefäßhöhen und Gefäßformen bei der Erfassung keine Rolle mehr spielen. Hierzu kann dann beispielsweise die eine optimale Perspektive für die Aufnahme des Gefäßes durch die Kamera gewählt werden, sodass die Information wie beispielsweise das Innenvolumen des Gefäßes möglichst gut und genau ermittelt werden kann. Der hier vorgestellte Ansatz ermöglicht beispielsweise ein Erfassen von transparenten Gefäßen, wie Gläsern sowie asymmetrischen Gefäßen. Zudem kann das Innenvolumen des erkannten und erfassten Gefäßes erkannt werden. Auf Grundlage des erkannten Innenvolumens des Gefäßes ist es möglich, dass der Heißgetränkeautomat den Geschmack des Heißgetränkes auf das erkannte Innenvolumen anpasst.

Das Verfahren kann gemäß einer Ausführungsform einen Schritt des Erfassens eines Bewegungssignals aufweisen, das eine Bewegung und/oder Position des mobilen Gerätes bei einem Erfassen des Gefäßes repräsentiert und im Schritt des Ausgebens kann das Gefäßinformationssignal unter Verwendung des erfassten Bewegungssignals ausgegeben werden. Auf diese Weise können Beschleunigungsdaten der Bewegung oder Positionsdaten der Position des mobilen Gerätes erfasst werden und damit die Flugbahn des mobilen Gerätes. Hierdurch kann eine sehr gute räumliche Erfassung des Gefäßes erreicht werden, sodass ein gewünschter zu ermittelnder Parameter des Gefäßes möglichst genau erkannt werden kann.

Das Verfahren kann gemäß einer Ausführungsform einen Schritt des Bestimmens eines Gefäßrandsignals aufweisen, das einen Rand und/oder eine Kontur des Gefäßes repräsentiert und im Schritt des Ausgebens kann das Gefäßinformationssignal unter Verwendung des bestimmten Gefäßrandsignals ausgegeben werden. So können beispielsweise auch Ränder oder Konturen von transparenten Gefäßen erfasst werden. Der Bediener hält dazu das mobile Gerät so über das Gefäß, dass die Kamera des mobilen Gerätes die Ränder des Gefäßes eindeutig und genau erfassen kann.

Das Verfahren kann gemäß einer Ausführungsform im Schritt des Ausgebens ein unter Verwendung des Gefäßrandsignals ermitteltes Innenvolumen des Gefäßes als Gefäßinformationssignal ausgeben. Die Bestimmung des Innenvolumens kann dabei unabhängig von der Gefäßhöhe und der Gefäßform sein. Außerdem kann hierdurch eine Vorverarbeitung des von der Kamera aufgenommenen Bildes im mobilen Gerät erfolgen, sodass ein numerischer oder schaltungstechnischer Aufwand im Heißgetränkeautomat möglichst geringgehalten werden kann und eine bereits oftmals im mobilen Gerät zur Verfügung stehende Rechnereinheit ohne signifikanten Mehraufwand genutzt werden kann. Das Verfahren kann gemäß einer Ausführungsform im Schritt des Einlesens das Gefäß aus einer Mehrzahl von in zumindest einem Bild der Kamera enthaltenen Objekten identifizieren, um das Informationssignal bereitzustellen. Auf diese Weise kann das Gefäß beispielsweise auf einem Küchentisch erfasst werden, auf dem sich noch andere Objekte wie Teller befinden. Auch hier kann eine Vorverarbeitung des von der Kamera aufgenommenen Bildes für die Identifizierung des Gefäßes in der Umgebung des mobilen Geräts im mobilen Gerät selbst erfolgen, sodass ein numerischer oder schaltungstechnischer Aufwand im Heißgetränkeautomat möglichst geringgehalten werden kann und eine bereits oftmals im mobilen Gerät zur Verfügung stehende Rechnereinheit ohne signifikanten Mehraufwand genutzt werden kann.

Ferner wird gemäß einer weiteren Ausführungsform des hier vorgestellten Ansatzes ein mobiles Gerät, insbesondere Mobiltelefon, mit einer Kamera und einer Steuervorrichtung zum Bereitstellen einer Information über ein Gefäß in einer Umgebung des mobilen Gerätes vorgesehen, die ausgebildet ist, um die Schritte des Verfahrens gemäß einem der vorangegangenen Ansprüche in entsprechenden Einheiten auszuführen und/oder anzusteuern.

Dadurch ist es möglich mit dem mobilen Gerät ein Gefäß zu erfassen und auf dieser Grundlage das Innenvolumen des Gefäßes zu bestimmen.

Es wird ferner ein Verfahren zum Ausgeben eines Heißgetränks aus einem Heißgetränkeautomaten vorgestellt, das die folgenden Schritt umfasst:
Einlesen eines Gefäßinformationssignals, das ein Innenvolumen eines Gefäßes repräsentiert; und
Ausgeben eines Heißgetränkebezugssignals unter Verwendung des Gefäßinformationssignals, wobei das Heißgetränkebezugssignal eine Ausgabe eines von einem Bediener gewünschten Heißgetränks mit einer dem Innenvolumen des Gefäßes entsprechende Menge ansteuert.

Dies ermöglicht einen auf das Innenvolumen des Gefäßes angepassten Heißgetränkebezug. Somit ist gewährleistet, dass für nahezu jede Gefäßform und Gefäßgröße das passende Heißgetränk ausgegeben werden kann.

Das Verfahren kann gemäß einer Ausführungsform im Schritt des Ausgebens das Heißgetränkebezugssignal unter Verwendung einer Information über eine von einem Bediener des Heißgetränkeautomaten bevorzugte Zusammensetzung eines Heißgetränkes ausgeben. Der Heißgetränkeautomat kann das Heißgetränk auf das Innenvolumen anpassen. Ist beispielsweise ein Heißgetränk für eine Standardgröße im Speicher des Heißgetränkeautomaten hinterlegt, passt der Heißgetränkeautomat für ein größeres oder kleineres Gefäß die Zusammensetzung und Menge des Heißgetränkes an.

Das Verfahren kann gemäß einer Ausführungsform einen Schritt des Speicherns einer Information des Gefäßinformationssignals für ein durch das Gefäßinformationssignal erfasstes Gefäß in einem nicht-flüchtigen Speicher des Heißgetränkeautomaten aufweisen. Auf diese Weise braucht ein Gefäß nur einmal erfasst werden und kann im Speicher des Heißgetränkeautomaten dauerhaft gespeichert werden.

Das Verfahren kann gemäß einer Ausführungsform im Schritt des Einlesens das Innenvolumen des Gefäßes unter Verwendung des Gefäßinformationssignals ermitteln, insbesondere wenn das Gefäßinformationssignal zumindest ein Abbild eines Außenumrisses und/oder einer Kontur des Gefäßes darstellt. Eine solches Ausführungsform bietet den Vorteil, dass speziell eintrainierte Algorithmen für die Bestimmung des Innenvolumens des Gefäßes in dem Heißgetränkeautomaten verwendet werden können und somit das Laden eines speziellen Programms auf das mobile Gerät entfallen kann.

Ferner wird gemäß einer weiteren Ausführungsform des hier vorgestellten Ansatzes eine Steuervorrichtung zum Ausgeben eines Heißgetränks vorgesehen, die ausgebildet ist, um die Schritte des Verfahrens in entsprechenden Einheiten auszuführen und/oder anzusteuern.

Ein Heißgetränkeautomat mit einer Einleseschnittstelle, kann gemäß einer Ausführungsform eine Steuervorrichtung gemäß einer hier vorgestellten Variante aufweisen.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf der oben benannten

Steuervorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Auch wenn der beschriebene Ansatz anhand eines Haushaltgeräts beschrieben wird, kann eine hier beschriebene Vorrichtung oder ein hier beschriebenes Verfahren entsprechend im Zusammenhang mit einem gewerblichen oder professionellen Gerät, beispielsweise einem Gastronomiegerät eingesetzt werden.

Der hier vorgestellte Ansatz schafft somit auch zwei Steuervorrichtungen, die ausgebildet sind, um die Schritte einer Variante der hier vorgestellten Verfahren in entsprechenden Einrichtungen durchzuführen, anzusteuern bzw. umzusetzen. Auch durch diese Ausführungsvariante der Erfindung in Form von Steuervorrichtungen können die der Erfindung zugrundeliegenden Aufgaben schnell und effizient gelöst werden.

Die Steuervorrichtungen können ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuervorrichtungen einlesbares Sensorsignal darstellen. Ein Ausgangssignal kann ein Steuersignal oder ein Datensignal darstellen, das an einer Ausgangsschnittstelle der Steuervorrichtungen bereitgestellt werden kann. Die Steuervorrichtungen können ausgebildet sein, um die Ausgangssignale unter Verwendung einer in Hardware oder Software umgesetzten Verarbeitungsvorschrift zu bestimmen. Beispielsweise können die Steuervorrichtungen dazu eine Logikschaltung, einen integrierten Schaltkreis oder ein Softwaremodul umfassen und beispielsweise als ein diskretes Bauelement realisiert sein oder von einem diskreten Bauelement umfasst sein.

Ein Ausführungsbeispiel der Erfindung ist in den Zeichnungen rein schematisch dargestellt und wird nachfolgend näher beschrieben. Es zeigt
- Figur 1: eine perspektivische Darstellung einer Gefäßerfassung mittels eines mobilen Gerätes gemäß einem Ausführungsbeispiel;
- Figur 2: eine perspektivische Darstellung einer Gefäßerfassung mittels eines mobilen Gerätes gemäß einem weiteren Ausführungsbeispiel;
- Figur 3: eine perspektivische Darstellung einer Gefäßerfassung mittels eines mobilen Gerätes gemäß einem dritten Ausführungsbeispiel;
- Figur 4: eine perspektivische Darstellung einer Gefäßerfassung mittels eines mobilen Gerätes gemäß einem vierten Ausführungsbeispiel;
- Figur 5: eine perspektivische Darstellung eines Heißgetränkeautomaten gemäß einem Ausführungsbeispiel;
- Figur 6: eine perspektivische Darstellung eines Heißgetränkeautomaten gemäß einem Ausführungsbeispiel;
- Figur 7: ein Ablaufdiagramm eines Verfahrens gemäß einem Ausführungsbeispiel; und
- Figur 8: ein Ablaufdiagramm eines Verfahrens gemäß einem weiteren Ausführungsbeispiel.

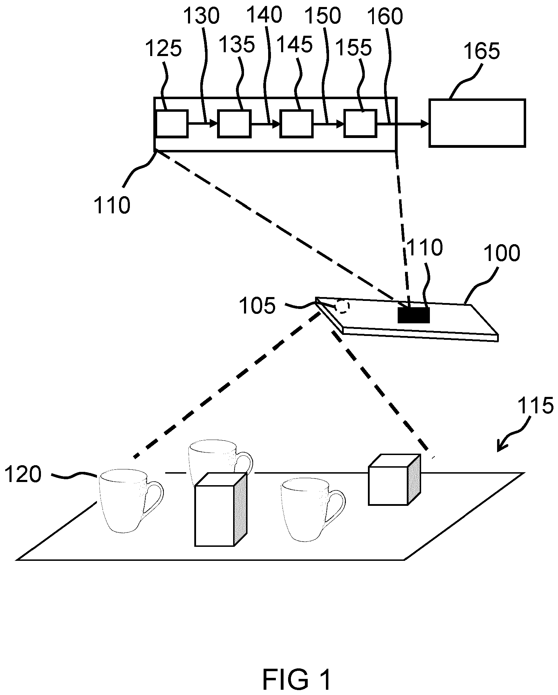

Figur 1 zeigt eine perspektivische Darstellung einer Gefäßerfassung mittels eines mobilen Gerätes 100 gemäß einem Ausführungsbeispiel. Bei dem mobilen Gerät 100 handelt es sich in Figur 1 um ein Mobiltelefon mit einer Kamera 105. Das mobile Gerät 100 weist zusätzlich eine Steuervorrichtung 110 auf. Mithilfe der Steuervorrichtung 110 kann aus einem mit der Kamera 105 erfassten Bild einer Umgebung 115 ein Gefäß 120 erkannt werden. Bei der Umgebung 115 kann es sich beispielsweise um einen Küchentisch handeln, auf dem sich Gefäße 120 und andere Gegenstände befinden. Die Gefäße 120 sind beispielhaft als Tassen ausgeformt. Bei den Gegenständen kann es sich beispielsweise um Teller handeln. Um in dieser Umgebung 115 ein Gefäß 120 zu erfassen, hält der Bediener das mobile Gerät 100 beispielhaft über die Umgebung 115, die Kamera 105 ist dabei auf die Umgebung 115 gerichtet. Die Kamera 105 des mobilen Gerätes 100 erfasst die Umgebung 115 und die in der Umgebung 115 befindlichen Objekte. Die Kamera 105 des mobilen Gerätes 100 leitet nun das von der Umgebung erfasste Bild an die Steuervorrichtung 110 weiter, in der nun das in der Umgebung 115 befindliche Gefäß 120 erkannt und erfasst es als solches erfasst wird. Diese Auswertung des Bildes der Kamera 105 geschieht über die im mobilen Gerät 100 befindliche Steuervorrichtung 110.

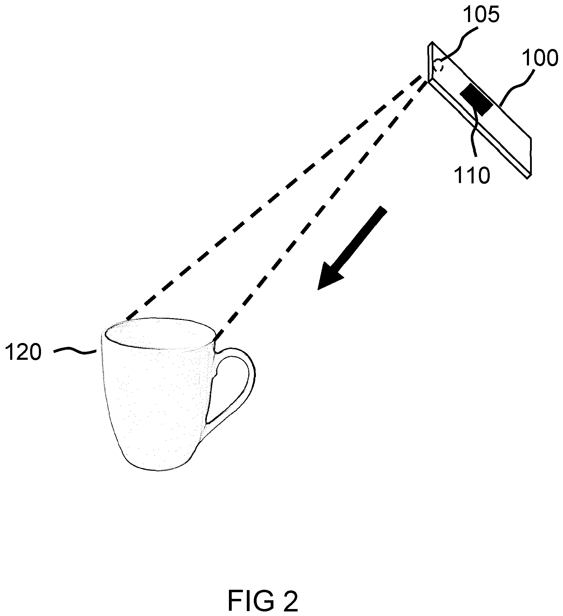

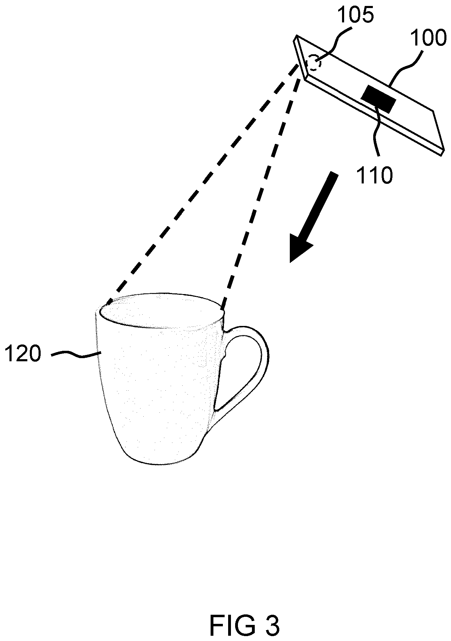

Die Steuervorrichtung 110 weist eine Einleseeinrichtung 125 auf. Die Einleseeinrichtung 125 ist ausgebildet, um ein Informationssignal 130 einzulesen. Das Einlesen erfolgt unter Verwendung der Kamera 105 des mobilen Gerätes 100. Das Informationssignal 130 repräsentiert das erkannte Gefäß 120 aus der Umgebung 115 des mobilen Gerätes 100, in diesem Falle eine Tasse 120. Ferner weist die Steuervorrichtung 110 eine Erfassungseinrichtung 135 auf. Die Erfassungseinrichtung 135 ist ausgebildet, um unter Verwendung des Informationssignals 130 ein Bewegungssignal 140 zu erfassen. Das Bewegungssignal 140 repräsentiert eine Bewegung und/oder eine Position des mobilen Gerätes 100 bei einem Erfassen des Gefäßes 120. Dieser Vorgang ist in Figur 2 dargestellt. Die Steuervorrichtung 110 weist außerdem eine Bestimmungseinrichtung 145 auf. Die Bestimmungseinrichtung 145 ist ausgebildet, um unter Verwendung des Bewegungssignals ein Gefäßrandsignal 150 zu bestimmen. Das Gefäßrandsignal 150 repräsentiert einen Rand des Gefäßes 120. Dieser Vorgang ist in Figur 3 dargestellt. Ferner weist die Steuervorrichtung 110 eine Ausgabeeinrichtung 155 auf. Die Ausgabeeinrichtung 155 ist ausgebildet, um ein Gefäßinformationssignal 160 auszugeben. Das Gefäßinformationssignal 160 repräsentiert ein ermitteltes Innenvolumen einen Gefäßes 120 und wird unter Verwendung des Gefäßrandsignals 150 ausgegeben. Das Gefäßinformationssignal 160 wird an eine Einleseschnittstelle eines Heißgetränkeautomaten 165 ausgegeben. Der Heißgetränkeautomat 165 ist dann in der Lage ein Heißgetränk auf Grundlage des ermittelten Innenvolumens des Gefäßes 120 in das Gefäß 120 auszugeben.

In Figur 1 ist der Vorgang des Einlesens des Informationssignals 130 durch die Einleseschnittstelle 125 dargestellt. Dies geschieht, indem der Bediener das mobile Gerät 100 mit der Kamera 105 auf eine Umgebung richtet, in der sich neben weiteren Objekten ein Gefäß 120 befindet. In der Steuervorrichtung 110, die auch als Software bezeichnet werden kann, ist ein Algorithmus hinterlegt, der z. B. auf einem Tisch erkennen kann, was eine Tasse 120 ist. Diesen Schritt kann auch vereinfacht werden, indem der Bediener dazu aufgefordert wird, die zu füllende Tasse 120 an einen leeren Platz zu stellen.

In der Steuervorrichtung 110, die auch als Kaffee-App bezeichnet werden kann, wird ein Programm aufgenommen, um Tassenvolumina zu erkennen. Dazu wird die jeweilige Kamera 105 verwendet. Es wird ein entsprechender Algorithmus im Programm hinterlegt, Bedienungsschritte, um den Bediener anzuleiten, und ein Datenspeicher, um zum einen bereits erfasste Gefäße 120 vorzuhalten, um die Erkennung zu erleichtern, zum anderen um weitere Gefäße 120, die der Bediener mit der Kamera 105 gescannt hat, aufzunehmen.

Durch den hier vorgestellten Ansatz soll die Problematik und räumliche Einschränkung der Erkennungssensorik im Heißgetränkeautomaten 165, der auch als Kaffeevollautomaten bezeichnet werden kann, gelöst werden. Es wird ermöglicht, dass jede Gefäßhöhe, das tatsächliche Gesamtinnenvolumen, unsymmetrische Gefäße und auch Gläser erkannt werden. Ziel des hier vorgestellten Ansatzes ist die Erkennung eines beliebigen Tassenvolumens mittels eines mobilen Gerätes 100 und einer Kaffee-App, die Speicherung des erkannten Tassenvolumens in der App, die Übertragung des Volumens in den Gerätespeicher des Heißgetränkeautomaten 165 und das Anpassen des Getränks an dieses Tassenvolumen.

Figur 2 zeigt eine perspektivische Darstellung einer Gefäßerfassung mittels eines mobilen Gerätes 100 gemäß einem weiteren Ausführungsbeispiel.

In Figur 2 ist der Vorgang des Erfassens eines Bewegungssignals dargestellt. Dies geschieht, indem der Bediener das mobile Gerät 100 mit der Kamera 105 in Richtung Gefäß 120 bewegt, sodass die Kamera 105 das Gefäß 120 erfassen kann. Das Gefäß 120 ist als Tasse ausgeformt. In der Steuervorrichtung 110 erfasst die Erfassungseinrichtung nun das Bewegungssignal. Das Bewegungssignal repräsentiert eine Bewegung und/oder eine Position des mobilen Gerätes 100 bei einem Erfassen des Gefäßes 120. Das Bewegungssignal wird unter Verwendung des zuvor in Figur 1 eingelesenen Informationssignals erfasst.

Die Erfassung des Bewegungssignal erfolgt so: Die App fordert den Bediener auf, das mobile Gerät 100 in Richtung Gefäß 120, das erfasst werden soll, zu bewegen, so dass die Kamera 105 das Gefäß 120 erfassen kann. Das mobile Gerät 100 erfasst die Beschleunigungsdaten der Bewegung und verfolgt damit die Flugbahn des mobilen Gerätes 100.

Figur 3 zeigt eine perspektivische Darstellung einer Gefäßerfassung mittels eines mobilen Gerätes 100 gemäß einem dritten Ausführungsbeispiel.

In Figur 3 ist der Vorgang des Bestimmens des Gefäßrandsignals dargestellt. Dies geschieht, indem der Bediener das mobile Gerät 100 mit der Kamera 105 so über die Tasse 120 hält, dass die Kamera 105 des mobilen Gerätes 100 den Rand der Tasse 120 erfassen kann. In der Steuervorrichtung 110 bestimmt die Bestimmungseinrichtung nun ein Gefäßrandsignal. Das Gefäßrandsignal repräsentiert den Rand der Tasse 120. Das Gefäßrandsignal wird unter Verwendung des zuvor in Figur 1 eingelesenen Informationssignals und des zuvor in Figur 2 erfassten Bewegungssignals bestimmt.

Der Bediener wird dazu aufgefordert, mit der Kamera 105 das Gefäß 120 so zu erfassen, dass die Kamera 105 die Kanten des Gefäßes 120 vollständig erfassen kann.

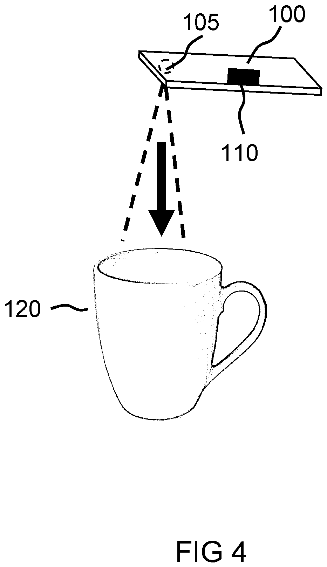

Figur 4 zeigt eine perspektivische Darstellung einer Gefäßerfassung mittels eines mobilen Gerätes 100 gemäß einem vierten Ausführungsbeispiel.

In Figur 4 ist der Vorgang des Ausgebens des Gefäßinformationssignals dargestellt. Dies geschieht, indem der Bediener das mobile Gerät 100 unmittelbar über die Tasse 120 hält, sodass die Kamera 105 die Tasse 120 komplett erfasst. In der Steuervorrichtung 110 gibt die Ausgabeeinrichtung nun ein Gefäßinformationssignal aus. Das Gefäßinformationssignal repräsentiert ein ermitteltes Innenvolumen der Tasse 120 und wird unter Verwendung des in Figur 3 bestimmten Gefäßrandsignals ausgegeben. Der Bediener hat die Möglichkeit die durch das Gefäßinformationssignal erfasste Tasse 120 zu speichern.

Anschließend wird das Gefäßinformationssignal an eine Einleseschnittstelle eines Heißgetränkeautomaten weitergeleitet. Der Heißgetränkeautomat bereitet dann auf Grundlage des Gefäßinformationssignals ein auf das Innenvolumen der Tasse 120 angepasstes Heißgetränk zu.

Der Bediener hält also die Kamera 105 so auf das Gefäß 120, dass das Gefäß 120 von oben komplett erfasst wird und bewegt dann das mobile Gerät 100 weiter in Richtung Gefäß 120.

Hier wird nun der Algorithmus zum Erfassen des Innenvolumens aktiv und erfasst das Volumen des Gefäßes 120, auf die der Bediener die Kamera 105 hält. Nachdem das Volumen erfasst wurde, soll der Bediener die Tasse 120 in der App speichern, z. B. als "weiße Kaffeetasse". Über die App kann er diese Tasse 120 inkl. Volumengröße auch an den Speicher des Heißgetränkeautomaten übertragen.

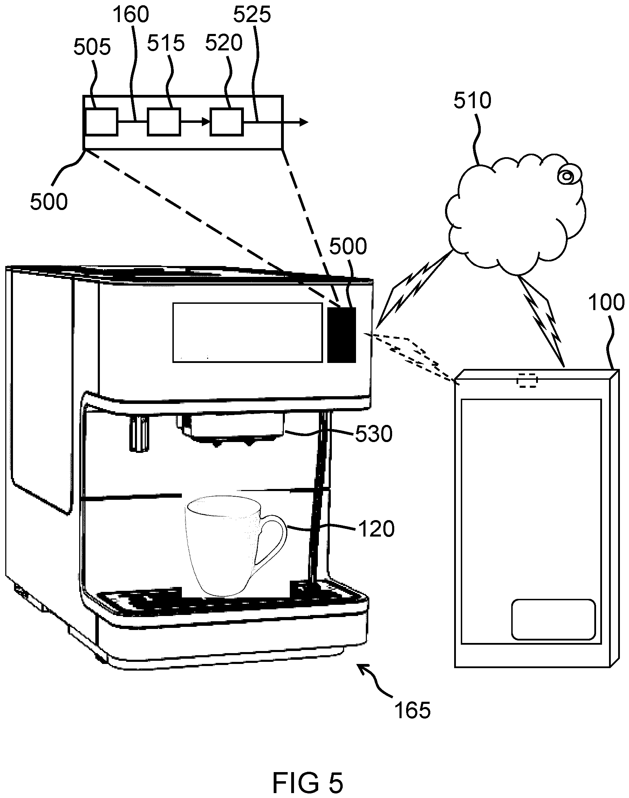

Figur 5 zeigt eine perspektivische Darstellung eines Heißgetränkeautomaten 165 gemäß einem Ausführungsbeispiel.

Der Heißgetränkeautomat 165 weist ebenfalls eine Steuervorrichtung 500 auf. Die Steuervorrichtung 500 umfasst eine Einleseeinrichtung 505. Die Einleseeinrichtung 505 ist ausgebildet, um das Gefäßinformationssignals 160 einzulesen. Das Gefäßinformationssignal 160 repräsentiert das Innenvolumen der Tasse 120 und wird beispielhaft per WLAN 510 von dem mobilen Gerät 100 an die Einleseschnittstelle des Heißgetränkeautomaten 165 übermittelt. Ferner weist die Steuervorrichtung 500 eine Speichereinrichtung 515 auf. Die Speichereinrichtung 515 ist ausgebildet, um das Gefäßinformationssignal 160 für eine erfasste Tasse 120 zu speichern. Somit braucht die Tasse 120 nur einmal vom Bediener mit dem mobilen Gerät 100 erfasst werden. Die Steuervorrichtung 500 weist zusätzlich eine Ausgabeeinrichtung 520 auf. Die Ausgabeeinrichtung 520 ist ausgebildet, um ein Heißgetränkebezugssignal 525 unter Verwendung des Gefäßinformationssignals 160 auszugeben. Das Heißgetränkebezugssignal 525 repräsentiert dabei ein von dem Bediener gewünschtes Heißgetränk mit einer dem Innenvolumen der Tasse 120 entsprechende Menge. Das Heißgetränkebezugssignal 525 wird unter Verwendung einer Information über eine bevorzugte Zusammensetzung eines Heißgetränks für den Bediener ausgegeben.

Nachdem das Innenvolumen der Tasse 120 erfasst und an den Heißgetränkeautomaten 165 übermittelt wurde, stellt der Bediener die Tasse unter den Auslauf 530 des Heißgetränkeautomaten 165, wählt über die App auf dem mobilen Gerät 100 oder den Heißgetränkeautomaten 165 die Tasse 120 an und wählt z. B. Kaffee.

Der Heißgetränkeautomat 165 wird nun den Kaffee zubereiten und dabei das Wasservolumen und die Mahlmenge so anpassen, dass der Kaffee genau in diese Tasse 120 passt und dabei geschmacklich passend ist. Hat der Bediener im Heißgetränkeautomaten 165 Getränke mit Standardgrößen (Kaffee 120 ml, Espresso 40 ml etc.) auf seinen Geschmack angepasst, so wird dieser Geschmack auf das Tassenvolumen "weiße Kaffeetasse" angepasst.

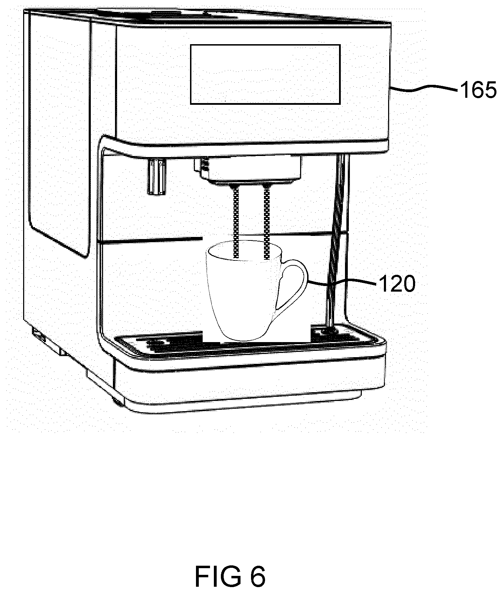

Figur 6 zeigt eine perspektivische Darstellung eines Heißgetränkeautomaten 165 gemäß einem Ausführungsbeispiel. Dabei kann es sich um den in Figur 5 beschriebenen Heißgetränkeautomaten 165 handeln. In Figur 6 wird das gewünschte Heißgetränk in die zuvor durch das mobile Gerät erfasste Tasse 120 ausgegeben.

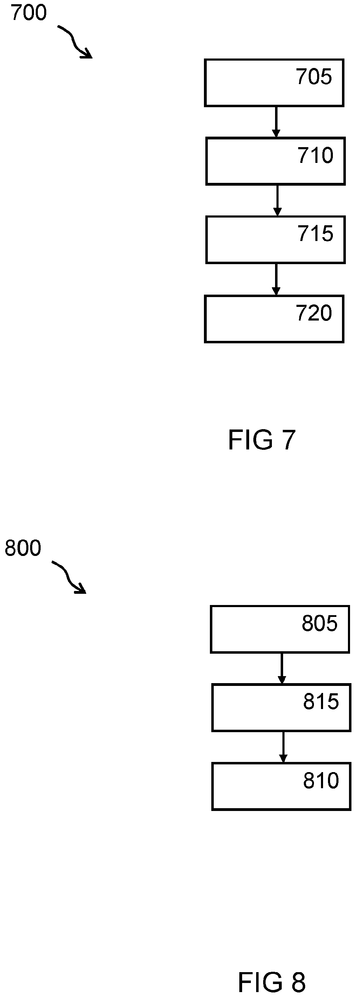

Figur 7 zeigt ein Ablaufdiagramm eines Verfahrens 700 zum Bereitstellen einer Information über ein Gefäß in einer Umgebung eines mobilen Gerätes, wobei das Verfahren 700 einen Schritt 705 des Einlesens eines Informationssignals, unter Verwendung einer Kamera des mobilen Gerätes umfasst, wobei das Informationssignal eine Information über das Gefäß in der Umgebung des mobilen Gerätes repräsentiert. Im Schritt 705 des Einlesens wird das Gefäß aus einer Mehrzahl von in zumindest einem Bild der Kamera enthaltenen Objekten identifiziert, um das Informationssignal bereitzustellen. In einem Schritt 710 des Erfassens wird ein Bewegungssignal erfasst, das eine Bewegung und/oder Position des mobilen Gerätes bei einem Erfassen des Gefäßes repräsentiert. Das Bewegungssignal wird unter Verwendung des zuvor im Schritt 705 des eingelesenen Informationssignals erfasst. In einem nächsten Schritt 715 wird ein Gefäßrandsignals bestimmt, das einen Rand des Gefäßes repräsentiert. Das Gefäßrandsignal wird unter Verwendung des zuvor im Schritt 710 erfassten Bewegungssignals bestimmt. In einem letzten Schritt 720 wird ein Gefäßinformationssignal an eine Einleseschnittstelle eines Heißgetränkeautomaten ausgegeben, wobei das Ausgeben unter Verwendung des bestimmten Gefäßrandsignals ausgeführt wird. Im Schritt 720 des Ausgebens wird ein unter Verwendung des Gefäßrandsignals ermitteltes Innenvolumen des Gefäßes als Gefäßinformationssignal ausgegeben

Figur 8 zeigt ein Ablaufdiagramm eines Verfahrens 800 zum Ausgeben eines Heißgetränks aus einem Heißgetränkeautomaten. Das Verfahren 800 umfasst einen Schritt 805 des Einlesens eines Gefäßinformationssignals, das ein Innenvolumen eines Gefäßes repräsentiert und einen Schritt 810 des Ausgebens eines Heißgetränkebezugssignals unter Verwendung des Gefäßinformationssignals, wobei das Heißgetränkebezugssignal ein von einem Bediener gewünschtes Heißgetränk mit einer dem Innenvolumen des Gefäßes entsprechende Menge repräsentiert. Im Schritt 805 des Einlesens wird das Innenvolumen des Gefäßes unter Verwendung des Gefäßinformationssignals ermittelt, insbesondere wenn das Gefäßinformationssignal zumindest ein Abbild eines Außenumrisses des Gefäßes darstellt. Im Schritt 810 des Ausgebens wird das Heißgetränkebezugssignal unter Verwendung einer Information über eine bevorzugte Zusammensetzung eines Heißgetränkes für einen Bediener ausgegeben.

Das Verfahren 800 umfasst zusätzlich einen Schritt 815 des Speicherns des Gefäßinformationssignals für ein durch das Gefäßinformationssignal erfasstes Gefäß in einem nicht-flüchtigen Speicher des Heißgetränkeautomaten.

## Patentansprüche

1. Verfahren (700) zum Bereitstellen einer Information über ein Gefäß (120) in einer Umgebung (115) eines mobilen Gerätes (100), wobei das Verfahren (700) die folgenden Schritte umfasst:
- Einlesen (705) eines Informationssignals (130), unter Verwendung einer Kamera (105) des mobilen Gerätes (100), wobei das Informationssignal (130) eine Information über das anhand der Aufnahme von der Kamera (105) am mobilen Gerät (100) erfassten Innenvolumen des Gefäßes (120) in der Umgebung (115) des mobilen Gerätes (100) repräsentiert,; und
- Ausgeben (720) eines Gefäßinformationssignals (160) an eine Einleseschnittstelle eines Heißgetränkeautomaten (165), wobei das Ausgeben unter Verwendung des eingelesen Informationssignals (130) ausgeführt wird.

2. Verfahren (700) gemäß Anspruch 1, mit einem Schritt des Erfassens (710) eines Bewegungssignals (140), das eine Bewegung und/oder Position des mobilen Gerätes (100) bei einem Erfassen des Gefäßes (120) repräsentiert und wobei im Schritt des Ausgebens (720) das Gefäßinformationssignal (160) unter Verwendung des erfassten Bewegungssignals (140) ausgegeben wird.

3. Verfahren (700) gemäß einem der vorangegangenen Ansprüche, mit einem Schritt des Bestimmens (715) eines Gefäßrandsignals (150), das einen Rand und/oder eine Kontur des Gefäßes (120) repräsentiert und wobei im Schritt des Ausgebens (720) das Gefäßinformationssignal (160) unter Verwendung des bestimmten Gefäßrandsignals (150) ausgegeben wird.

4. Verfahren (700) gemäß einem der vorangegangenen Ansprüche, wobei im Schritt des Ausgebens (720) ein unter Verwendung des Gefäßrandsignals (150) ermitteltes Innenvolumen des Gefäßes (120) als Gefäßinformationssignal (160) ausgegeben wird.

5. Verfahren (700) gemäß einem der vorangegangenen Ansprüche, wobei im Schritt des Einlesens (705) das Gefäß (120) aus einer Mehrzahl von in zumindest einem Bild der Kamera (105) enthaltenen Objekten identifiziert wird, um das Informationssignal (130) bereitzustellen.

6. Mobiles Gerät (100), insbesondere Mobiltelefon, mit einer Kamera (105), wobei das mobile Gerät (100) ferner eine Steuervorrichtung (110) zum Bereitstellen einer Information über ein Gefäß (120) in einer Umgebung (115) des mobilen Gerätes (100) umfasst, wobei die Steuervorrichtung (110) ausgebildet ist, um die Schritte (705, 710, 715, 720) des Verfahrens (700) gemäß einem der Ansprüche 1 bis 5 in entsprechenden Einheiten (125, 135, 145, 155) auszuführen und/oder anzusteuern.

7. Heißgetränkeautomat (165), umfassend eine Steuervorrichtung (500), umfassend:
- eine Einleseeinrichtung (505), die ausgebildet ist, ein Gefäßinformationssignal (160) von einem mobilen Gerät (100) einzulesen, wobei das Gefäßinformationssignal (160) das Innenvolumen einer Tasse (120) repräsentiert und beispielhaft per WLAN 510 von dem mobilen Gerät 100 an die Einleseschnittstelle des Heißgetränkeautomaten 165 übermittelt wird;
- eine Ausgabeeinrichtung (520), welche ausgebildet ist, ein Heißgetränkebezugssignal (525) unter Verwendung des Gefäßinformationssignals (160) auszugeben, wobei das Heißgetränkebezugssignal (525) dabei ein von dem Bediener gewünschtes Heißgetränk mit einer dem Innenvolumen der Tasse (120) entsprechenden Menge repräsentiert.

8. System, umfassend ein Heißgetränkeautomat (165) gemäß Anspruch 7 und ein mobiles Gerät (100) gemäß Anspruch 6.

9. Computer-Programmprodukt mit Programmcode zur Durchführung der Verfahren (700, 800) nach einem der Ansprüche 1 bis 5, wenn das Computer-Programmprodukt auf einem mobilen Gerät (100) gemäß Anspruch 6 ausgeführt wird.

## Claims

1. Method (700) for providing information about a vessel (120) in the vicinity (115) of a mobile device (100), wherein the method (700) comprises the following steps:
- reading (705) an information signal (130) using a camera (105) of the mobile device (100), wherein the information signal (130) represents information about the internal volume of the vessel (120) in the vicinity (115) of the mobile device (100) recorded on the basis of the image from the camera (105) on the mobile device (100); and
- outputting (720) a vessel information signal (160) to a reading interface of a hot beverage machine (165), wherein the output is carried out using the read information signal (130).

2. Method (700) according to claim 1, comprising a step of detecting (710) a motion signal (140) which represents a movement and/or position of the mobile device (100) upon detection of the vessel (120), and wherein in the step of outputting (720), the vessel information signal (160) is output using the detected motion signal (140).

3. Method (700) according to either of the preceding claims, comprising a step of determining (715) a vessel edge signal (150) which represents an edge and/or a contour of the vessel (120), and wherein in the step of outputting (720), the vessel information signal (160) is output using the determined vessel edge signal (150).

4. Method (700) according to any of the preceding claims, wherein in the outputting step (720) an internal volume of the vessel (120) determined using the vessel edge signal (150) is output as a vessel information signal (160).

5. Method (700) according to any of the preceding claims, wherein in the reading step (705), the vessel (120) is identified from a plurality of objects contained in at least one picture of the camera (105) in order to provide the information signal (130).

6. Mobile device (100), in particular a mobile phone, with a camera (105), wherein the mobile device (100) further comprises a control apparatus (110) for providing information about a vessel (120) in the vicinity (115) of the mobile device (100), wherein the control apparatus (110) is designed to carry out and/or control the steps (705, 710, 715, 720) of the method (700) according to any of claims 1 to 5 in corresponding units (125, 135, 145, 155).

7. Hot beverage machine (165) comprising a control apparatus (500) comprising:
- a reading device (505) which is designed to read a vessel information signal (160) from a mobile device (100), wherein the vessel information signal (160) represents the internal volume of a cup (120) and is transmitted, for example via WLAN (510), from the mobile device (100) to the reading interface of the hot beverage machine (165),
- an output device (520) which is designed to output a hot beverage reference signal (525) using the vessel information signal (160), wherein the hot beverage reference signal (525) represents a hot beverage desired by the operator with a quantity corresponding to the internal volume of the cup (120).

8. System comprising a hot beverage machine (165) according to claim 7 and a mobile device (100) according to claim 6.

9. Computer program product comprising program code for carrying out the method (700, 800) according to any of claims 1 to 5 when the computer program product is run on a mobile device (100) according to claim 6.

## Revendications

1. Procédé (700) permettant de fournir des informations sur un récipient (120) dans un environnement (115) d'un appareil mobile (100), dans lequel le procédé (700) comprend les étapes suivantes :
- lecture (705) d'un signal d'informations (130), à l'aide d'une caméra (105) de l'appareil mobile (100), dans lequel le signal d'informations (130) représente des informations sur le volume intérieur du récipient (120) dans l'environnement (115) de l'appareil mobile (100), lequel volume intérieur est détecté à l'aide de la prise de vue de la caméra (105) sur l'appareil mobile (100), et
- émission (720) d'un signal d'informations de récipient (160) vers une interface de lecture d'un distributeur automatique de boissons chaudes (165), dans lequel l'émission est exécutée à l'aide du signal d'informations (130) lu.

2. Procédé (700) selon la revendication 1, comportant une étape de détection (710) d'un signal de mouvement (140) représentant un mouvement et/ou une position de l'appareil mobile (100) lors d'une détection du récipient (120), et dans lequel, à l'étape d'émission (720), le signal d'informations de récipient (160) est émis à l'aide du signal de mouvement (140) détecté.

3. Procédé (700) selon l'une des revendications précédentes, comportant une étape de détermination (715) d'un signal de bord de récipient (150) représentant un bord et/ou un contour du récipient (120), et dans lequel, à l'étape d'émission (720), le signal d'informations de récipient (160) est émis à l'aide du signal de bord de récipient (150) déterminé.

4. Procédé (700) selon l'une des revendications précédentes, dans lequel, à l'étape d'émission (720), un volume intérieur du récipient (120) défini à l'aide du signal de bord de récipient (150) est émis en tant que signal d'informations de récipient (160).

5. Procédé (700) selon l'une des revendications précédentes, dans lequel, à l'étape de lecture (705), le récipient (120) est identifié parmi une pluralité d'objets contenus dans au moins une image de la caméra (105) afin de fournir le signal d'informations (130).

6. Appareil mobile (100), en particulier téléphone mobile, comportant une caméra (105), dans lequel l'appareil mobile (100) comprend en outre un appareil de commande (110) pour la fourniture d'informations sur un récipient (120) dans un environnement (115) de l'appareil mobile (100), dans lequel le dispositif de commande (110) est configuré pour exécuter et/ou commander les étapes (705, 710, 715, 720) du procédé (700) selon l'une des revendications 1 à 5 dans des unités (125, 135, 145, 155) correspondantes.

7. Distributeur automatique de boissons chaudes (165), comprenant un dispositif de commande (500), comprenant :
- un élément de lecture (505) configuré pour lire un signal d'informations de récipient (160) provenant d'un appareil mobile (100), dans lequel le signal d'informations de récipient (160) représente le volume intérieur d'une tasse (120) et est transmis, à titre d'exemple, par WLAN (510) de l'appareil mobile (100) à l'interface de lecture du distributeur automatique de boissons chaudes (165) ;
- un élément d'émission (520) configuré pour émettre un signal de référence de boisson chaude (525) à l'aide du signal d'informations de récipient (160), dans lequel le signal de référence de boisson chaude (525) représente ainsi une boisson chaude souhaitée par l'opérateur comportant une quantité correspondant au volume intérieur de la tasse (120).

8. Système comprenant un distributeur automatique de boissons chaudes (165) selon la revendication 7 et un appareil mobile (100) selon la revendication 6.

9. Produit programme informatique comportant un code de programme permettant de réaliser le procédé (700, 800) selon l'une des revendications 1 à 5 lorsque le produit programme informatique est exécuté sur un appareil mobile (100) selon la revendication 6.
